(19) Europäisches Patentamt
European Patent Office
Office européen des brevets

(11) EP 0 569 252 B1

(12) **EUROPEAN PATENT SPECIFICATION**

(45) Date of publication and mention
of the grant of the patent:
**12.03.1997 Bulletin 1997/11**

(51) Int. Cl.$^6$: **B05B 9/06**, B05B 7/24,
A01M 7/00

(21) Application number: **93303559.4**

(22) Date of filing: **07.05.1993**

(54) **Controller for mobile air/liquid sprayer**

Steuervorrichtung für einen beweglichen Luftzerstäuber

Dispositif de commande pour pulvérisateur pneumatique mobile

(84) Designated Contracting States:
**DE FR GB IT NL**

(30) Priority: **07.05.1992 GB 9209849**

(43) Date of publication of application:
**10.11.1993 Bulletin 1993/45**

(73) Proprietor: **CLEANACRES MACHINERY LTD.
Gloucestershire GL54 4DX (GB)**

(72) Inventor: **Parsons, C.I.
Stroud, Gloucestershire GL5 1EA (GB)**

(74) Representative: **Robinson, John Stuart
MARKS & CLERK,
Alpha Tower,
Suffolk Street Queensway
Birmingham, B1 1TT (GB)**

(56) References cited:
**FR-A- 2 542 165        GB-A- 2 167 320**

Printed by Rank Xerox (UK) Business Services
2.13.16/3.4

## Description

The present invention relates to a controller for a mobile air/liquid sprayer. Such a controller may be used to control a sprayer of the type comprising a plurality of nozzles equally spaced apart laterally of the direction of movement and arranged to mix air and liquid so as to form a spray, for instance for spraying chemicals in agricultural applications.

FR-A2-2 542 165 relates to spraying equipment according to preamble of claim 1, having a pump for supplying a liquid to a nozzle at a rate proportional to the displacement speed of the spraying equipment. An air compressor is also provided to supply air at low pressure to the nozzle.

GB-A-2 167 320 relates to a spray control system having a spray nozzle and a pneumatically controlled needle valve for regulating flow of a sealant to the nozzle. A computer controller controls signals to a proportional control valve to control atomising air and fan air supplied to the spray nozzle in response to the speed of a robot arm upon which the spray nozzle is mounted.

According to the invention, there is provided a controller for a mobile air/liquid sprayer, comprising first means responsive to the speed of the sprayer for controlling the supply of liquid to the sprayer so as to spray a predetermined substantially constant amount of liquid per unit area, and second means for controlling the supply of air so as to provide a substantially constant predetermined spray quality substantially independent of sprayer speed.

The term "spray quality" as used herein refers to the distribution of the diameters of liquid droplets produced by the sprayer. The spraying nozzles of the sprayer are of the type in which liquid and air are mixed internally to produce a spray of droplets with a range of droplet diameters. The distribution may conveniently be represented by a graph or histogram of the fraction of the total liquid sprayed contained within droplets of a given size or given range of sizes versus droplet size. The graph or histogram may then be integrated with respect to droplet size to produce a cumulative volume curve.

Conventionally, cumulative volume curves for a series of standard liquid nozzles may be plotted onto a single graph to produce a family of curves. The graph may then be divided into a plurality of regions such that each of the standard curves lies along the centre of its respective region.

The "spray quality" can thus be determined by producing a cumulative volume curve for a given nozzle and plotting this onto the graph to find within which region the cumulative volume curve lies.

The expression "a substantially constant spray quality substantially independent of sprayer speed" means that the distribution of droplet diameters remains within a selected one of the regions throughout the range of working speeds of the sprayer. The regions may be those defined in the conventional manner with respect to standard liquid nozzles. However, the regions may be defined in any other desired way and the controller is capable of maintaining the spray quality, by controlling the air supply, within any reasonably defined practical limits or end values.

Although it is diameters of the droplets which are measured, this is conventionally related to the droplet volumes on the assumption that there are no air inclusions. This assumption is reasonable for liquid nozzles, but liquid/air nozzles can produce droplets having air inclusions so that the liquid volumes of the droplets are not necessarily defined exactly by the droplet diameters. However, research with liquid/air nozzles shows that equivalent characteristics can be defined, and that the spray quality may be defined in terms of the distribution of droplet diameters.

The first means may be arranged to control the pressure of the liquid in proportion to the square of the sprayer speed. Alternatively or additionally, the first means may be arranged to control the liquid pressure in proportion to the square of the predetermined substantially constant amount of liquid per unit area. Alternatively or additionally, for a sprayer of the type comprising a plurality of spraying nozzles uniformly spaced transversely to the direction of movement of the sprayer, the first means may be arranged to control the liquid pressure in proportion to the square of the spacing between adjacent nozzles. Alternatively or additionally, the first means may be arranged to control the liquid pressure in proportion to a parameter representing the spray quality. Means may be provided for presetting or adjusting the predetermined substantially constant amount of liquid per unit area, and such means may be manually operable.

As a further alternative, the first means may be arranged to control the flow rate of the liquid. The first means may then control the flow rate to be proportional to the sprayer speed and/or the spacing between adjacent nozzles and/or a further parameter representing spray quality and/or to maintain a substantially constant amount of liquid per unit area.

The second means may be arranged to control the air pressure in proportion to the square of the sprayer speed. Alternatively or additionally, the second means may be arranged to control the air pressure in proportion to the square of the predetermined substantially constant amount of liquid per unit area. Alternatively or additionally, for a sprayer comprising a plurality of spraying nozzles uniformly spaced apart transversely to the direction of movement, the second means may be arranged to control the air pressure in proportion to the square of the spacing between adjacent nozzles. Alternatively or additionally, the second means may be arranged to control the air pressure in proportion to a parameter representing the substantially constant predetermined spray quality. Means may be provided for presetting or adjusting a parameter representing spray quality, and such means may be manually operable.

As a further alternative, the second means may be arranged to control the flow rate of the air. The air flow rate may be controlled to be proportional to sprayer speed and/or the spacing between adjacent nozzles and/or a further parameter representing spray quality and/or to maintain a substantially constant amount of liquid per unit area.

It is thus possible to provide a controller for use with a sprayer comprising one or more nozzles of the air/liquid mixing type in which the supplies of liquid and air are controlled so as to provide uniform spraying at uniform quality irrespective of the speed of the sprayer. Such a controller may be used with an agricultural sprayer, for instance mounted on a tractor or other agricultural vehicle, for spraying agricultural chemicals, such as insecticides, herbicides, and fungicides. The spraying rate (quantity of liquid per unit area) and the quality of the spray may be preset or adjusted by an operator to predetermined desired values and the controller ensures that the liquid and air supply are adjusted to compensate for changes or variations in the speed of movement of the sprayer. Also, the rate of spraying may be adjusted while maintaining a given desired spray quality. Alternatively, the spray quality may be adjusted while maintaining a uniform coverage or rate of application.

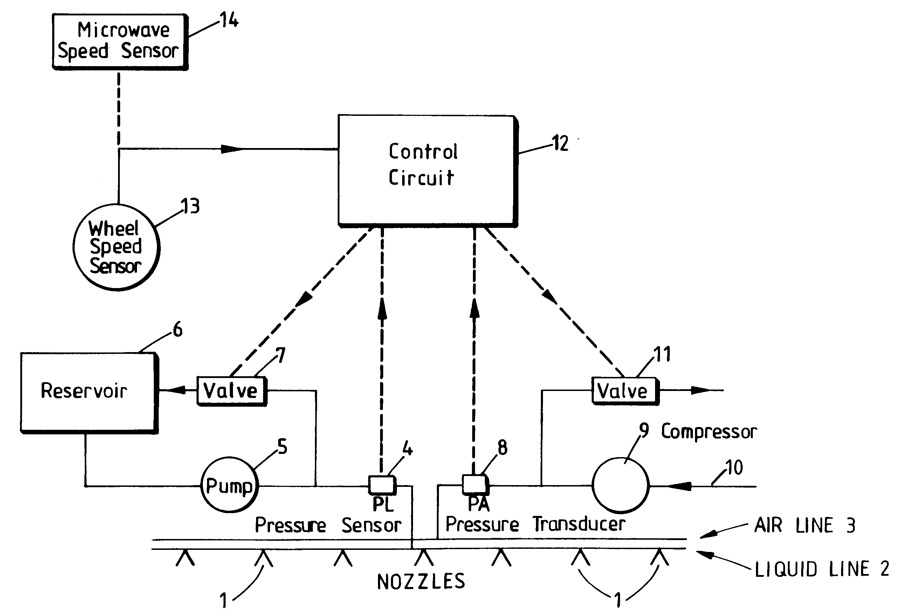

The invention will be further described, by way of example, with reference to the accompanying drawing, which is a schematic diagram of a controller constituting an embodiment of the invention together with an agricultural sprayer.

The sprayer comprises a plurality of nozzles 1 mounted on and equally spaced along one or more booms for attachment to an agricultural tractor. When in use, the booms extend transversely of the longitudinal axis of the tractor which, during spraying of a crop or the like, is intended to move forwards at a substantially constant speed. The nozzles are of the liquid/air mixing type, for instance as disclosed in European Patent No.0225193.

The nozzles are connected to a common liquid line 2 and a common air line 3. The liquid line 2 is connected via a pressure sensor 4 to a pump 5 which receives the liquid to be sprayed from a reservoir 6. A valve 7 is connected between the outlet of the pump 5 and the reservoir 6 for controlling the pressure of the liquid supplied by the pump 5.

The air line 3 is connected via a pressure transducer 8 to the output of an air compressor 9 which compresses air from the atmosphere via an inlet 10. A valve 11 vents air from the outlet of the compressor 9 to the atmosphere so as to control the air pressure supplied by the compressor 9.

A control circuit 12 has inputs connected to the pressure transducers 4 and 8 and outputs connected to the valves 7 and 11 for controlling the pressures of the liquid and the air supplied by the pump 5 and the compressor 9, respectively. Further, the control circuit 12 has an input connected to a sprayer speed sensor, for instance comprising a tractor wheel speed sensor 13 or a microwave speed sensor 14.

The control circuit may, for instance, comprise a programmed data processor which controls the valves 7 and 11 in accordance with a predetermined control strategy on the basis of the tractor speed and the pressure of the liquid and air as determined by the transducers 4 and 8. In addition, the control circuit 12 has manual input means, for instance in the form of a keyboard, for entering, presetting, or adjusting data and parameters relevant to the operation of the sprayer. In particular, the spraying rate (quantity of liquid per unit area) and the spray quality can be set manually by an operator so as to achieve a desired spraying performance.

The control circuit 12 determines a liquid flow rate Lf in litres per minute in accordance with the following expression:

$$Lf = AR.v.s/600$$

where AR is the required application rate in litres per hectare as preset or adjusted by an operator, v is the forward speed of the sprayer in kilometres per hour determined from the sensor 13 or 14, and s is the spacing in metres between adjacent nozzles 1. The control circuit 12 then calculates the desired liquid pressure Pl to achieve the required application rate from the following expression:

$$Pl = (Lk.Lf^2) + Q$$

where Lk is a "liquid" constant relating to the type of nozzle in use, and Q is a quality level or parameter preset by an operator to give a desired spray quality. The control circuit 12 compares the desired liquid pressure Pl with the actual pressure PL measured by the sensor 4 and controls the spilling of liquid from the outlet of the pump 5 by the valve 7 back to the reservoir 6 so that the actual pressure PL is made substantially equal to the desired pressure Pl.

The control circuit 12 further calculates the desired air pressure Pa from the following expression:

$$Pa = (Ak.Lf^2) + Q$$

where Ak is an "air" constant related to the type of nozzle in use. The control circuit 12 compares the desired air pressure Pa with the actual air pressure PA determined by the sensor 8 and controls the venting of air from the compressor 9 by the valve 11 so as to make the actual air pressure PA substantially equal to the desired air pressure Pa.

The liquid constant Lk and the air constant Ak may be derived experimentally.

For any given values of required application rate AR and quality level Q, the control box 12 ensures that the desired application rate and spray quality are achieved irrespective, within practical limits, of the speed of the tractor and hence of the sprayer. Thus, once the application rate and quality level have been set, the tractor may be operated at any desired speed within a predetermined range over which the sprayer can function correctly without altering the application rate and quality level. Further, an operator can change the application rate substantially independently of the quality level and vice versa. A parameter indicating a desired quality level may be entered into the control circuit 12, which then determines from this the value of the quality level Q used in the above expressions. Alternatively, several different predetermined application rates and/or spray qualities may be stored in the control circuit 12 and selected manually as required.

**Claims**

1. A controller for a mobile air/liquid sprayer, comprising first means (4, 5, 7, 12) responsive to the speed of the sprayer for controlling the supply of liquid to the sprayer so as to spray a predetermined substantially constant amount of liquid per unit area, and second means (8, 9, 11, 12) for controlling the supply of air, characterised in that the second means (8, 9, 11, 12) controls the supply of air so as to provide a substantially constant predetermined spray quality substantially independent of sprayer speed.

2. A controller as claimed in Claim 1, characterised in that the first means (4, 5, 7, 12) is arranged to control the pressure of the liquid in proportion to the square of the sprayer speed.

3. A controller as claimed in Claim 1 or 2, characterised in that the first means (4, 5, 7, 12) is arranged to control the liquid pressure in proportion to the square of the predetermined substantially constant amount of liquid per unit area.

4. A controller as claimed in any one of the preceding claims for a sprayer of the type comprising a plurality of spraying nozzles (1) uniformly spaced transversely to the direction of movement of the sprayer, characterised in that the first means (4, 5, 7, 12) is arranged to control the liquid pressure in proportion to the square of the spacing between adjacent nozzles (1).

5. A controller as claimed in any one of the preceding claims, characterised in that the first means (4, 5, 7, 12) is arranged to control the liquid pressure in proportion to a parameter representing the spray quality.

6. A controller as claimed in any one of the preceding claims, characterised in that the second means (8, 9, 11, 12) is arranged to control the air pressure in proportion to the square of the sprayer speed.

7. A controller as claimed in any one of the preceding claims, characterised in that the second means (8, 9, 11, 12) is arranged to control the air pressure in proportion to the square of the predetermined substantially constant amount of liquid per unit area.

8. A controller as claimed in any one of the preceding claims for a sprayer of the type comprising a plurality of spraying nozzles (1) uniformly spaced transversely to the direction of movement of the sprayer, characterised in that the second means (8, 9, 11, 12) is arranged to control the air pressure in proportion to the square of the spacing between adjacent nozzles (1).

9. A controller as claimed in any one of the preceding claims, characterised in that the second means (8, 9, 11, 12) is arranged to control the air pressure in proportion to a parameter representing the substantially constant predetermined spray quality.

10. A controller as claimed in any one of Claims 1 or 6 to 9, characterised by liquid flow rate measuring means and in that the first means is arranged to control the liquid flow rate to be proportional to at least one of sprayer speed, spacing between adjacent nozzles measured in a direction transverse to the direction of travel of the sprayer, and the square root of a parameter representing spray quality.

11. A controller as claimed in any one of Claims 1 to 5 or 10 when dependent on Claim 1, characterised by air flow rate measuring means and in that the second means is arranged to control the air flow rate to be proportional to at least one of sprayer speed, spacing between adjacent nozzles measured in a direction transverse to the direction of travel of the sprayer, and the square root of a parameter representing spray quality.

**Patentansprüche**

1. Steuervorrichtung für einen beweglichen Luft-/Flüssigkeitszerstäuber, mit ersten Mitteln (4, 5, 7, 12), die auf die Geschwindigkeit des Zerstäubers ansprechen, um die Flüssigkeitszufuhr zum Zerstäuber zu steuern, so daß er eine vorbestimmte, im wesentlichen konstante Flüssigkeitsmenge pro Flächeneinheit zerstäubt, und mit zweiten Mitteln (8, 9, 11, 12) zum Steuern der Luftzufuhr, dadurch gekennzeichnet, daß die Zweiten Mittel (8, 9, 11, 12) die Luftzufuhr so steuern, daß eine im wesentlichen konstante, vorbestimmte Zerstäubungsqualität erzielt wird, die im wesentlichen unabhängig ist von der Geschwindigkeit des Zerstäubers.

2. Steuervorrichtung, wie beansprucht in Anspruch 1, dadurch gekennzeichnet, daß die ersten Mittel (4, 5, 7, 12) so eingerichtet sind, daß sie den Druck der Flüssigkeit proportional zum Quadrat der Geschwindigkeit des Zerstäubers steuern.

3. Steuervorrichtung, wie beansprucht in Anspruch 1 oder 2, dadurch gekennzeichnet, daß die ersten Mittel (4, 5, 7, 12) so eingerichtet sind, daß sie den Druck der Flüssigkeit proportional zum Quadrat der vorbestimmten, im wesentlichen konstanten Flüssigkeitsmenge pro Flächeneinheit steuern.

4. Steuervorrichtung, wie beansprucht in irgendeinem der vorhergehenden Ansprüche für einen Zerstäuber der Art, der eine Mehrzahl von Sprühdüsen (1) aufweist, die quer zur Bewegungsrichtung des Zerstäubers mit gleichförmigem Abstand angeordnet sind, dadurch gekennzeichnet, daß die ersten Mittel (4, 5, 7, 12) so eingerichtet sind, daß sie den Flüssigkeitsdruck proportional zum Quadrat der Beabstandung zwischen benachbarten Düsen (1) steuern.

5. Steuervorrichtung, wie beansprucht in irgendeinem der vorhergehenden Ansprüche, dadurch gekennzeichnet, daß die ersten Mittel (4, 5, 7, 12) so eingerichtet sind, daß sie den Flüssigkeitsdruck proportional zu einem Parameter steuern, der die Zerstäubungsqualität darstellt.

6. Steuervorrichtung, wie beansprucht in irgendeinem der vorhergehenden Ansprüche, dadurch gekennzeichnet, daß die zweiten Mittel (8, 9, 11, 12) dazu eingerichtet sind, den Luftdruck proportional zum Quadrat der Geschwindigkeit des Zerstäubers zu steuern.

7. Steuervorrichtung, wie beansprucht in irgendeinem der vorhergehenden Ansprüche, dadurch gekennzeichnet, daß die zweiten Mittel (8, 9, 11, 12) dazu eingerichtet sind, den Luftdruck proportional zum Quadrat der vorbestimmten, im wesentlichen konstanten Flüssigkeitsmenge pro Flächeneinheit zu steuern.

8. Steuervorrichtung, wie beansprucht in irgendeinem der vorhergehenden Ansprüche für einen Zerstäuber der Art, der eine Mehrzahl von Sprühdüsen (1) aufweist, die quer zur Bewegungsrichtung des Zerstäubers gleichförmig beabstandet sind, dadurch gekennzeichnet, daß die zweiten Mittel (8, 9, 11, 12) dazu eingerichtet sind, den Luftdruck proportional zum Quadrat der Beabstandung zwischen benachbarten Düsen (1) zu steuern.

9. Steuervorrichtung, wie beansprucht in irgendeinem der vorhergehenden Ansprüche, dadurch gekennzeichnet, daß die zweiten Mittel (8, 9, 11, 12) dazu eingerichtet sind, den Luftdruck proportional zu einem Parameter zu steuern, der die im wesentlichen konstante, vorbestimmte Zerstäubungsqualität darstellt.

10. Steuervorrichtung, wie beansprucht in irgendeinem der Ansprüche 1 oder 6 bis 9, gekennzeichnet durch Mittel zum Messen des Durchsatzes der Flüssigkeitsströmung, sowie dadurch, daß die ersten Mittel dazu eingerichtet sind, den Durchsatz der Flüssigkeitsströmung so zu steuern, daß er proportional ist zu mindestens einer von der Zerstäubergeschwindigkeit, der Beabstandung zwischen benachbarten Düsen, gemessen in Querrichtung zur Bewegungsrichtung des Zerstäubers, und der Quadratwurzel eines Parameters, der die Zerstäubungsqualität darstellt.

11. Steuervorrichtung, wie beansprucht in irgendeinem der Ansprüche 1 bis 5 oder 10, soweit abhängig von Anspruch 1, gekennzeichnet durch Mittel zum Messen des Durchsatzes der Luftströmung, sowie dadurch, daß die zweiten Mittel dazu eingerichtet sind, den Durchsatz der Luftströmung so zu steuern, daß er proportional ist zu mindestens einer von der Zerstäubergeschwindigkeit, der Beabstandung zwischen benachbarten Düsen, gemessen in Querrichtung zur Bewegungsrichtung des Zerstäubers, und der Quadratwurzel eines Parameters, der die Zerstäubungsqualität darstellt.

## Revendications

1. Dispositif de commande pour pulvérisateur air/liquide mobile, comprenant des premiers moyens (4, 5, 7, 12) sensibles à la vitesse du pulvérisateur, pour commander l'approvisionnement du pulvérisateur en liquide, de façon à pulvériser une quantité prédéterminée de liquide sensiblement constante par unité de surface, et des seconds moyens (8, 9, 11, 12) pour commander l'approvisionnement en air, caractérisé en ce que les seconds moyens (8, 9, 11, 12) commandent l'approvisionnement en air de façon à fournir une qualité de pulvérisation prédéterminée sensiblement constante et sensiblement indépendante de la vitesse de pulvérisation.

2. Dispositif de commande selon la revendication 1, caractérisé en ce que les premiers moyens (4, 5, 7, 12) sont ajustés pour commander la pression du liquide proportionnellement au carré de la vitesse de pulvérisation.

3. Dispositif de commande selon la revendication 1 ou 2, caractérisé en ce que les premiers moyens (4, 5, 7, 12) sont ajustés pour commander la pression du liquide proportionnellement au carré de la quantité prédéterminée de liquide sensiblement constante par unité de surface.

4. Dispositif de commande selon l'une quelconque des revendications précédentes, pour un pulvérisateur du type comprenant une pluralité de buses de pulvérisation (1) régulièrement espacées transversalement au sens de déplacement du pulvérisateur, caractérisé en ce que les premiers moyens (4, 5, 7, 12) sont ajustés pour commander la pression du liquide proportionnellement au carré de la distance comprise entre des buses (1) voisines.

5. Dispositif de commande selon l'une quelconque des revendications précédentes, caractérisé en ce que les premiers moyens (4, 5, 7, 12) sont ajustés pour commander la pression du liquide proportionnellement à un paramètre représentatif de la qualité de pulvérisation.

6. Dispositif de commande selon l'une quelconque des revendications précédentes, caractérisé en ce que les seconds moyens (8, 9, 11, 12) sont ajustés pour commander la pression de l'air proportionnellement au carré de la vitesse de pulvérisation.

7. Dispositif de commande selon l'une quelconque des revendications précédentes, caractérisé en ce que les seconds moyens (8, 9, 11, 12) sont ajustés pour commander la pression de l'air proportionnellement au carré de la quantité prédéterminée de liquide sensiblement constante par unité de surface.

8. Dispositif de commande selon l'une quelconque des revendications précédentes, pour un pulvérisateur du type comprenant une pluralité de buses de pulvérisation (1) régulièrement espacées transversalement au sens de déplacement du pulvérisateur, caractérisé en ce que les seconds moyens (8, 9, 11, 12) sont ajustés pour commander la pression de l'air proportionnellement au carré de la distance comprise entre des buses (1) voisines.

9. Dispositif de commande selon l'une quelconque des revendications précédentes, caractérisé en ce que les seconds moyens (8, 9, 11, 12) sont ajustés pour commander la pression de l'air proportionnellement à un paramètre représentatif de la qualité de pulvérisation prédéterminée sensiblement constante.

10. Dispositif de commande selon l'une quelconque des revendications 1 ou 6 à 9, caractérisé par des moyens de mesure du débit du liquide et en ce que les premiers moyens sont ajustés pour commander le débit du liquide de manière à ce qu'il soit proportionnel à au moins une de la vitesse de pulvérisation, de la distance comprise entre des buses voisines mesurée transversalement au sens de déplacement du pulvérisateur, et de la racine carrée d'un paramètre représentatif de la qualité de pulvérisation.

11. Dispositif de commande selon l'une quelconque des revendications 1 à 5 ou 10 si dépendantes de la revendication 1, caractérisé par des moyens de mesure du débit de l'air et en ce que les seconds moyens sont ajustés pour commander le débit de l'air de manière à ce qu'il soit proportionnel à au moins une de la vitesse de pulvérisation, de la distance comprise entre des buses voisines mesurée transversalement au sens de déplacement du pulvérisateur, et de la racine carrée d'un paramètre représentatif de la qualité de pulvérisation.

Microwave Speed Sensor — 14

Wheel Speed Sensor — 13

Control Circuit — 12

Reservoir — 6

Valve — 7

Pump — 5

PL — 4
Pressure Sensor

PA — 8
Pressure Transducer

Compressor — 9

Valve — 11

10

NOZZLES

AIR LINE 3

LIQUID LINE 2

1